# EUROPEAN PATENT APPLICATION

(11) **EP 2 731 114 A1**
(43) Date of publication of application: **14.05.2014**
(21) Application number: 12191925.2
(22) Date of filing: 09.11.2012
(51) Int. Cl.: H01F 1/00, B03C 1/015

(54) **Method for separating a fluid from a mixture of fluids using ferromagnetic nanoparticles**

(71) Applicant: Shell Internationale Research Maatschappij B.V., 2596 HR The Hague (NL)
(72) Inventor: te Riele, Paul Marie, 2288 GS Rijswijk (NL); Verbeek, Paulus Henricus Joannes, 2288 GS Rijswijk (NL); Sarkar, Anitha, 2288 GS Rijswijk (NL)
(74) Representative: Matthezing, Robert Maarten

(57) **Abstract**

A fluid is separated from a mixture of fluids by:
- mixing the mixture of fluids with ferromagnetic Lower Critical Solution Temperature (LCST) polymer coated nanoparticles, which are configured to be adsorbed to the fluid;
- exerting a magnetic field to the mixture of fluids and LCST polymer coated nanoparticles to separate at least some of the fluid adsorbed to the LCST polymer coated nanoparticles from the fluid mixture.

## Description

### BACKGROUND OF THE INVENTION

The invention relates to a method for separating a fluid from a mixture of fluids using ferromagnetic nanoparticles.

Use of magnetic particulates/fluid for separation of desired phase from multiphase mixtures is well known in the art. Magnetic particulates which may be coated with surfactants, polymers, dispersants etc attached to their surfaces are added to a multiphase mixture resulting in collection of a dispersed phase on to the magnetic particulate surfaces. A magnetic field gradient is then applied to cause separation of the magnetic particulate - dispersed phase complex from the continuous phase of multiphase mixture.

Use of nanoparticles compositions for achieving industrial applications such as separation and decontamination of substances from biological fluids, selective feedstock from refinery streams etc have been suggested and described in patent publications.

US patent application 20110139687 describes a method of separating polar organic molecule contaminants from a fluid hydrocarbon refinery stream that adversely affect processing schemes by use of magnetic nanoparticles. By dispersing magnetic nanoparticles in to a refinery stream, a magnetic nanoparticle - polar molecule complex mixture is formed in which polar contaminant molecules are adsorbed on the magnetic nanoparticles. This complex is then separated from the refinery stream by applying an external magnetic field following which the magnetic nanoparticles are regenerated by heating the complex to temperatures below the magnetic phase transition temperatures of the magnetic nanoparticle compound and/or by dissolving in water. Such a method however has disadvantages that very high temperatures may be required for recovery of magnetic nanoparticles that may severely limit their reuse.

US patent 20100051510discloses a magnetic nanoparticle complex to which a ligand is associated and consisting of a functional group capable of combining with an acid component or a conjugate base of the acid component, such as naphthenic acid in a hydrocarbon fluid.

European patent EP2244268 describes a method of separating a biological material from a biological fluid using magnetic nanoparticle compositions of shell and core type and coated with polymer material in which the core comprises ferromagnetic,ferrimagnetic or superparamagnetic material coated with one or more graphene layers and shell consists of an oxidic glass composition. However, the publication describes no effective methods/processes of the use compositions and or their recovery for applications in chemical separation of emulsions such as produced water in oil fields.

In US patent application 2010059449 a method is described of magnetic separation using carbon coated magnetic nanoparticles of shell and core type for separating dispersed phase and/or dissolved material from multiphasic or monophasic systems. However, the method has disadvantages that used magnetic particles are recovered for reuse in further separation by application of stronger magnetic fields than that are applied in the first separation step.

To circumvent one or more limitations of the prior art techniques described above, it would be advantageous to have a magnetic separation method using high surface energy smaller size magnetic nanoparticles and their easy recovery for subsequent separation. In particular, it would be advantageous to develop magnetic nanoparticle compositions that are suitably coated by selected polymers and that bind to liquid-liquid interface than preferentially be adsorbed on a particular phase. Further, it would be advantageous to configure such magnetic nanoparticles to vary in size in response to controlled temperatures above ambient temperatures thereby enabling easily recovery.

A problem with the known methods is that it is difficult to remove the nanoparticles from the fluid after separation of the fluid from the fluid mixture.

There is a need for and improved method for separating a fluid from a mixture of fluids using ferromagnetic nanoparticles, wherein the ferromagnetic nanoparticles can be released from the fluid after the fluid separation and can be re-used for further fluid separation.

### SUMMARY OF THE INVENTION

In accordance with the invention there is provided a method for separating a fluid from a mixture of fluids comprises:
- mixing the mixture of fluids with ferromagnetic nanoparticles coated with thermoresponsive polymers with tunable Lower Critical Solution Temperatures (LCST) , which are tuned to be adsorbed to the fluid at the temperature of the fluid mixture;
- exerting a magnetic field to the mixture of fluids and LCST polymer coated nanoparticles to induce the LCST polymer coated nanoparticles to migrate and to thereby separate at least some of the fluid adsorbed to the LCST polymer coated nanoparticles from the fluid mixture.

The mixture of fluids may be a fluid emulsion, both oil in water emulsion and water in oil emulsions, and the fluid may be a discontinuous fluid phase in the emulsion and the LCST polymer coated nanoparticles may be induced to be adsorbed to the fluid at the interfaces between the discontinuous and continuous fluid phases of the emulsion by the Pickering effect.

Furthermore, the LSCT polymer coated nanoparticles may comprise magnetite (FeOₓ)and be configured to have a wettability such that they adhere more to oil than to water at an ambient or initial temperature in the fluid mixture, whilst their wettability changes in response to a variation of temperature (both cooling or heating). This may be accomplished by configuring the LCST polymer coated nanoparticles such that the thermoresponsive polymer coated surface molecules shrink in response to a temperature increase above the ambient temperature.

The wettability of the LCST polymer coated nanoparticles may change in response to the shrinking of the thermoresponsive polymers, such that their adhesion to the fluid is reduced and they are released from the fluid in response to a temperature increase above the ambient temperature.

Subsequently, the released polymer coated nanoparticles may be cooled and reused for separating the fluid from the fluid mixture.

These and other features, embodiments and advantages of the method according to the invention are described in the accompanying claims, abstract and the following detailed description of non-limiting embodiments depicted in the accompanying drawings, in which description reference numerals are used which refer to corresponding reference numerals that are depicted in the drawings. Similar reference numerals in different figures denote the same or similar objects.

### BRIEF DESCRIPTION OF THE DRAWINGS

Fig.1A shows hydrated hydrophilic Thermoresponsive Polymer(TP) chains at a temperature below the Lower Critical Solution Temperature (LCST) thereof;
Fig.1B shows dehydrated hydrophobic Thermoresponsive Polymer(TP) chains at a temperature above the Lower Critical Solution Temperature (LCST) thereof;
Fig.2A shows a graph of the variation of the contact angle e of TP coated nanoparticles in response to increase of temperature from below to above the LCST;
Fig.2B shows that below the LCST the TP chains are hydrated;
Fig.2C shows that below the LCST the TP chains are collapsed;
Fig.3A shows schematically a Pickering oil in water emulsion where oil emulsion droplets are surrounded by hydrated expanded TP coated magnetic nanoparticles;
Fig.3B shows schematically a Pickering oil in water emulsion where oil particles are surrounded by collapsed expanded TP coated magnetic nanoparticles and thereby induced enhanced coalescence;
Fig.3C shows a picture a Pickering oil in water emulsion where oil particles are surrounded by hydrated expanded TP coated magnetic nanoparticles;
Fig.3D shows a picture of a cold (T<LCST) oil in water mixture, where the oil droplets are surrounded by hydrated TP coated magnetic nanoparticles;
Fig.3E shows a picture of a heated (T>LCST) oil in water mixture, where the oil droplets are surrounded by collapsed TP coated magnetic nanoparticles;
Fig.4A schematically show a Thermoresponsive Polymer(TP) with a core filled with single or multiple magnetic magnetite nanoparticles;
Fig.4B shows how an oil droplet surrounded by TP coated magnetic magnetite nanoparticles is removed from an oil in water emulsion by a magnetic force;
Fig.4C schematically shows how where oil particles surrounded by collapsed expanded TP coated magnetic nanoparticles are induce enhanced coalescence; and
Fig.4D schematically shows how collapsed TP coated magnetic nanoparticles are removed from the coalesced oil droplets by applying a magnetic field to the mixture of oil droplets.
Fig.5A shows thermal response of core-shell particles in solution. Silica particles are coated with a LCST thermoresponsive polymer (PEGMA/DEGMA 20:80 LCST ~50 degrees Celsius). Graphs indicate temperature sweep in blue and consequent change in hydrodynamic radius. Reduction in scattering intensity is due to gravity settling.

### DETAILED DESCRIPTION OF THE DEPICTED EMBODIMENTS

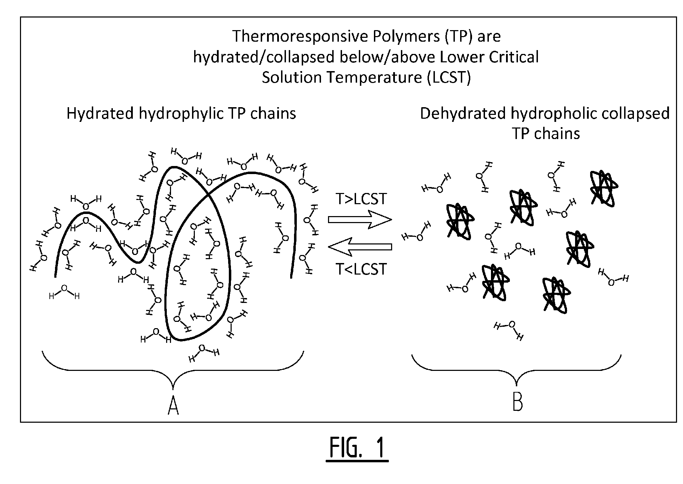

Fig.1A shows hydrated hydrophilic Thermoresponsive Polymer(TP) chains at a temperature below the Lower Critical Solution Temperature (LCST) thereof;
Fig.1B shows dehydrated hydrophobic Thermoresponsive Polymer(TP) chains at a temperature above the Lower Critical Solution Temperature (LCST) thereof;

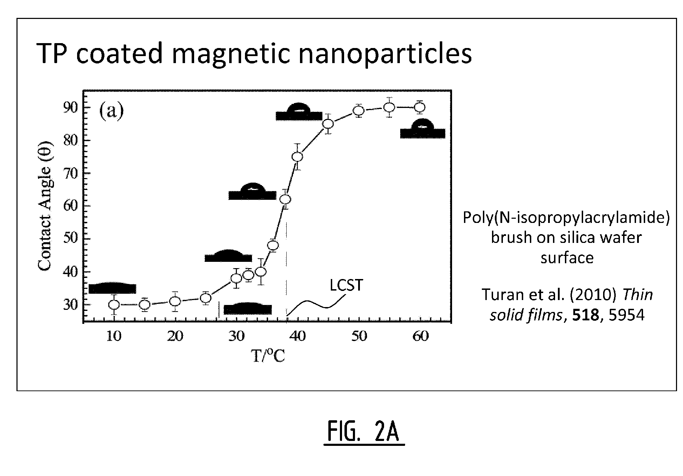

Fig.2A shows a graph of the variation of the contact angle e of TP coated nanoparticles in response to increase of temperature from below to above the LCST;

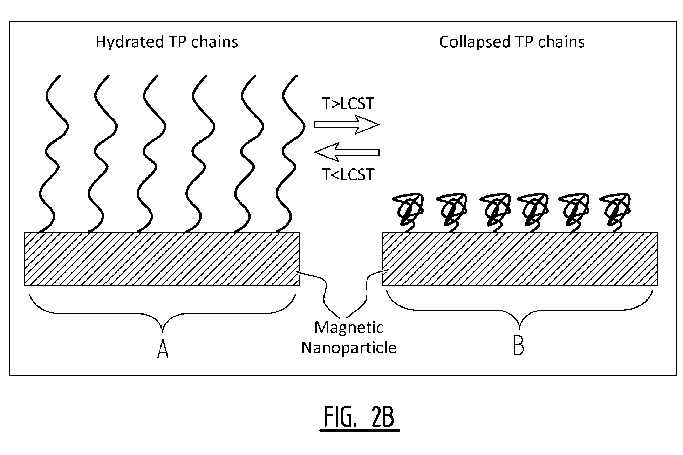

Fig.2B shows that below the LCST the TP chains are hydrated;
Fig.2C shows that below the LCST the TP chains are collapsed;

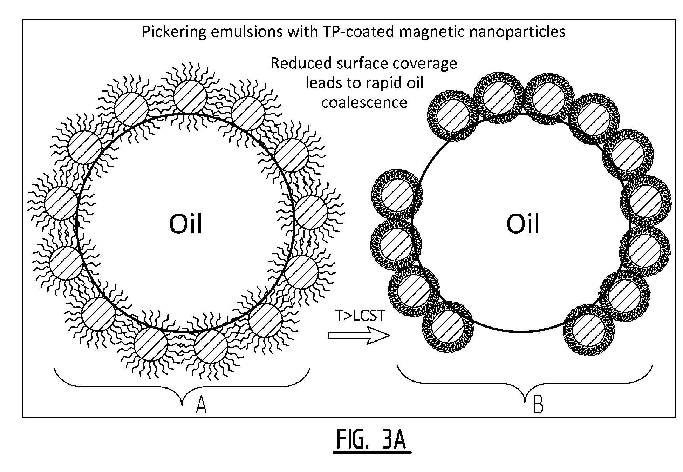

Fig.3A shows schematically a pickering oil in water emulsion where oil particles are surrounded by hydrated expanded TP coated magnetic nanoparticles;

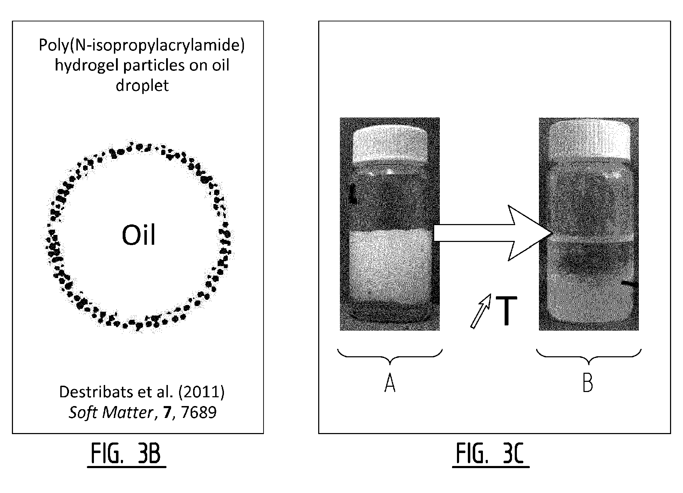

Fig.3B shows schematically a pickering oil in water emulsion where oil particles are surrounded by collapsed expanded TP coated magnetic nanoparticles and thereby induced to coalesce;
Fig.3C shows a picture a pickering oil in water emulsion where oil particles are surrounded by hydrated expanded TP coated magnetic nanoparticles;
Fig.3D shows a picture of a cold (T<LCST) oil in water mixture, where the oil droplets are surrounded by hydrated TP coated magnetic nanoparticles;
Fig.3E shows a picture of a heated (T>LCST) oil in water mixture, where the oil droplets are surrounded by collapsed TP coated magnetic nanoparticles;

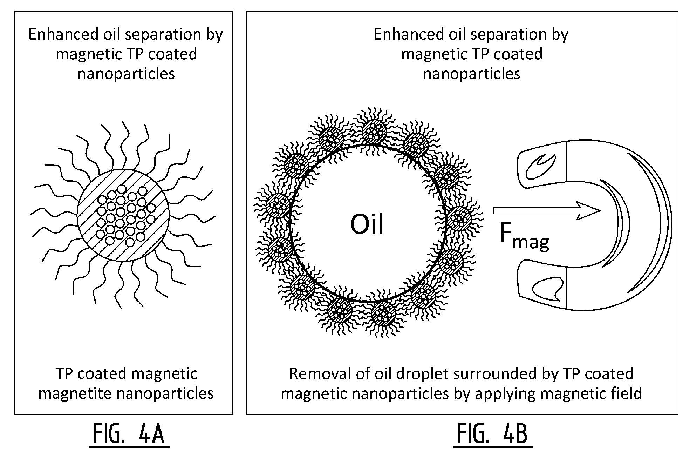

Fig.4A schematically show a Thermoresponsive Polymer(TP) with a core filled with magnetic magnetite nanoparticles;
Fig.4B shows how an oil droplet surrounded by TP coated magnetic magnetite nanoparticles is removed from an oil in water emulsion by a magnetic force;

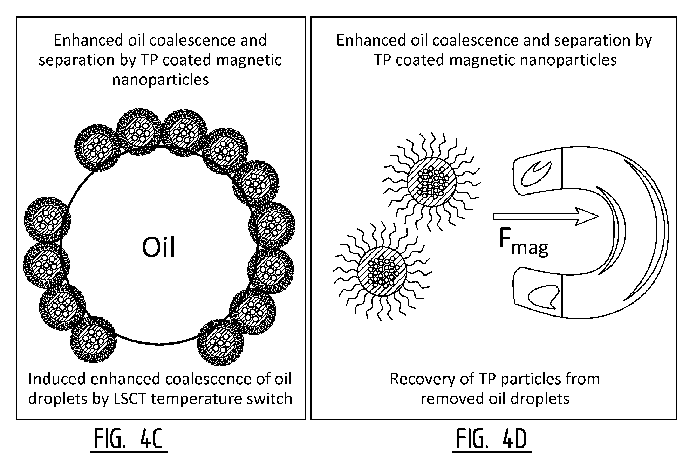

Fig.4C schematically shows how where oil particles surrounded by collapsed expanded TP coated magnetic nanoparticles are induced to coalesce; and
Fig.4D schematically shows how collapsed TP coated magnetic nanoparticles are removed from the coalesced oil droplets by applying a magnetic field to the mixture of oil droplets.

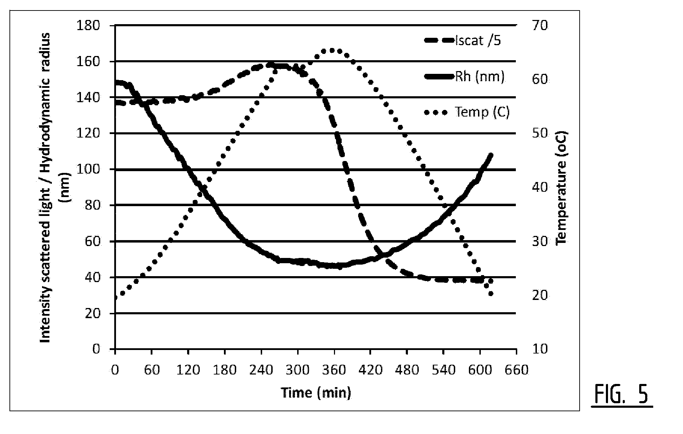

Fig. 5A graph shows the thermal response of the particles by induced changes in particle dimensions upon thermal trigger indicating the switch to the collapsed state of the polymers.

## Claims

1. A method for separating a fluid from a mixture of fluids comprises:
- mixing the mixture of fluids with ferromagnetic Lower Critical Solution Temperature (LCST) polymer coated nanoparticles, which are configured to be adsorbed to the fluid at the temperature of the fluid mixture;
- exerting a magnetic field to the mixture of fluids and LCST polymer coated nanoparticles to induce the LCST polymer coated nanoparticles to migrate and to thereby separate at least some of the fluid adsorbed to the LCST polymer coated nanoparticles from the fluid mixture.

2. The method of claim 1, wherein the mixture of fluids is a fluid emulsion and the fluid is a discontinuous fluid phase in the emulsion and the LCST polymer coated nanoparticles are induced to be adsorbed to the fluid at the interfaces between the discontinuous and continuous fluid phases of the emulsion by the Pickering effect.

3. The method of claim 2, wherein the emulsion is an oil in water emulsion of which the discontinuous fluid phase comprises oil and the continuous phase comprises water.

4. The method of claim 3, wherein the LSCT polymer coated nanoparticles are configured to have a wettability such that they adhere more to oil than to water at an ambient temperature in the fluid mixture.

5. The method of any one of claims 1-4, wherein the LCST polymer coated nanoparticles comprise magnetite (FeOₓ).

6. The method of any one of claims 1-5, wherein the LCST polymer coated nanoparticles comprise other Thermoresponsive Polymers(TP).

7. The method of claim 6, wherein the thermoresponsive polymer(TP) comprises N-isopropylacrylamide.

8. The method of claim 7, wherein the thermoresponsive polymer(TP) comprises a Poly(N-isopropylacrylamide)brush on silica nanoparticles.

9. The method of claim 1-8, wherein the LCST polymer coated nanoparticles are configured such that their wettability changes in response to a variation of temperature.

10. The method of claim 1-9, wherein the LCST polymer coated nanoparticles are configured to shrink in response to a temperature increase above the ambient temperature.

11. The method of claim 10, wherein wettability of the LCST polymer coated nanoparticles changes in response to the shrinking of the LCST polymer coated nanoparticles, such that their adhesion to the fluid is reduced and they are released from the fluid in response to a temperature increase above the ambient temperature.

12. The method of claim 11, wherein the released LCST polymer coated nanoparticles are cooled and reused for separating the fluid from the fluid mixture.
